(19) **Europäisches Patentamt / European Patent Office / Office européen des brevets**

(11) **EP 4 279 317 B1**

(12) **EUROPÄISCHE PATENTSCHRIFT**

(45) Veröffentlichungstag und Bekanntmachung des Hinweises auf die Patenterteilung:
**19.02.2025  Patentblatt 2025/08**

(21) Anmeldenummer: **23170356.2**

(22) Anmeldetag: **27.04.2023**

(51) Internationale Patentklassifikation (IPC):
**B60L 3/12** (2006.01)  **B60L 58/13** (2019.01)
**G01R 31/367** (2019.01)  **G01R 31/382** (2019.01)
**G01R 31/385** (2019.01)  **G01R 31/387** (2019.01)
**H02J 7/00** (2006.01)  **B60L 58/40** (2019.01)
**B60W 20/13** (2016.01)  **H01M 8/04537** (2016.01)
**H01M 8/04858** (2016.01)  **H02J 7/34** (2006.01)
**H01M 10/44** (2006.01)

(52) Gemeinsame Patentklassifikation (CPC):
**B60L 3/12; B60L 58/13; B60L 58/40;**
**H01M 8/04619; H01M 8/04626; H01M 8/04656;**
**H01M 8/0494; H01M 8/04947; H01M 8/04953;**
**H01M 10/44; H02J 7/007188; H02J 7/34;**
H01M 2220/20; H01M 2250/20; H01M 2250/402;
(Forts.)

(54) **LEISTUNGSSTEUEREINRICHTUNG ZUR STEUERUNG DER ELEKTRISCHEN LADELEISTUNG EINER ENERGIEQUELLE**

POWER CONTROL DEVICE FOR CONTROLLING CHARGING ELECTRIC POWER OF POWER SOURCE

DISPOSITIF DE COMMANDE DE PUISSANCE POUR COMMANDER LA PUISSANCE DE CHARGE ÉLECTRIQUE D'UNE SOURCE D'ÉNERGIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.05.2022  DE 102022204879**

(43) Veröffentlichungstag der Anmeldung:
**22.11.2023  Patentblatt 2023/47**

(73) Patentinhaber: **Siemens Mobility GmbH**
**81739 München (DE)**

(72) Erfinder: **Hassler, Stefan**
**91281 Kirchenthumbach, OT Neuzirkendorf (DE)**

(74) Vertreter: **Siemens Patent Attorneys**
**Postfach 22 16 34**
**80506 München (DE)**

(56) Entgegenhaltungen:
**EP-A1- 3 766 724      EP-B1- 1 087 877**
**CN-A- 102 470 771      DE-A1- 102011 116 127**
**DE-A1- 102012 208 461      US-A1- 2012 109 443**
**US-B2- 8 294 416**

(52) Gemeinsame Patentklassifikation (CPC): (Forts.)
    H02J 2300/30; H02J 2310/48

**Beschreibung**

Die Erfindung bezieht sich auf eine Leistungssteuereinrichtung zur Steuerung einer elektrischen Ladeleistung einer Energiequelle, die zum Aufladen eines elektrischen Energiespeichers dient.

Werden Energiespeicher, insbesondere Batterien, von Fahrzeugen wie beispielsweise Schienenfahrzeugen während der Fahrt geladen, beispielsweise mittels einer Brennstoffzelle oder über ein externes Energieversorgungsnetz, so sollte berücksichtigt werden, dass die Energiespeicher stets einen Ladezustand aufweisen, der einerseits so klein ist, dass die Energiespeicher bei der Fahrt ggf. Bremsleistung aufnehmen können, und andererseits so groß ist, dass die Energiespeicher beispielsweise bei längeren Bergauffahrten ohne externe Energieversorgung, die hierfür erforderliche Energie mit ausreichend Puffer und Leistungsreserve zur Verfügung stellen können. Erfolgt das Laden beispielsweise mit Brennstoffzellen, so ist bezüglich der letztgenannten Bergauffahrten nämlich zu berücksichtigen, dass die Antriebsleistung der Fahrzeuge bei Bergauffahrten die maximale Brennstoffzellenleistung der Brennstoffzellen oft deutlich überschreiten kann, sodass die Energiespeicher die Differenz zwischen nötiger Antriebsleistung und maximaler Brennstoffzellenleistung in einem solchen Falle zur Verfügung stellen müssen.

Darüber hinaus sollte die Lebensdauer der Energiespeicher berücksichtigt werden. Beispielsweise sollte vermieden werden, dass der maximal mögliche Ladezustand oder gar ein leerer Ladezustand zu häufig auftritt.

Aus dem Dokument US 8 204 416 B2 ist ein Verfahren sowie eine Einrichtung zur Steuerung des Arbeitspunktes einer Batterie, insbesondere für eine sekundäre Batterie eines Fahrzeugs, bekannt, wobei ein Ladezustand der Batterie erfasst wird und ein aktueller Arbeitspunkt mittels eines von einer Temperatur und/oder einem Alterungszustand abhängigen fortlaufend angepassten Sollwerts für den Ladezustand eingestellt wird. Aus dem Dokument US 2012/109443 A1 ist ein Steuerungssystem für ein hybrides Fahrzeug mit einer Batterie bekannt. Aus dem Dokument EP 1 087 877 B1 ist ein Steuerungssystem für ein aus mindestens einem Energiespeicher und einer Energiequelle bestehendes Hybridsystem bekannt.

Der Erfindung liegt die Aufgabe zugrunde, mit Blick auf die oben beschriebenen Randbedingungen eine besonders geeignete Leistungssteuereinrichtung anzugeben.

Diese Aufgabe wird erfindungsgemäß durch eine Leistungssteuereinrichtung, ein Fahrzeug sowie ein Verfahren mit den jeweiligen Merkmalen der unabhängigen Patentansprüche gelöst. Jeweilige Ausgestaltungen sind in abhängigen Patentansprüchen angegeben.

Ein erster Aspekt der Erfindung betrifft eine Leistungssteuereinrichtung zur Steuerung einer elektrischen Ladeleistung einer Energiequelle, die zum Aufladen eines elektrischen Energiespeichers dient. Kennzeichnend weist die Leistungssteuereinrichtung eine Vorgabeänderungseinrichtung auf, die dazu ausgebildet ist, eine Sollladeleistungsvorgabe in Abhängigkeit vom jeweiligen Ladezustand des Energiespeichers unter Bildung einer korrigierten Ladeleistungsvorgabe zu ändern, wenn sich ein den Ladezustand angebender Ladezustandsistwert einer oberen oder unteren Bereichsgrenze eines vorgegebenen Sollbandes nähert.

Ein wesentlicher Vorteil der erfindungsgemäßen Leistungssteuereinrichtung besteht in der nachträglichen Änderung bzw. Korrektur einer Sollladeleistungsvorgabe, wenn sich der Ladezustandsistwert der oberen oder unteren Bereichsgrenze nähert, wodurch ein Überladen oder zu starkes Entladen des Energiespeichers vermieden werden kann.

Nach einer Weiterbildung der erfindungsgemäßen Leistungssteuereinrichtung führt die Vorgabeänderungseinrichtung die Korrektur der Sollladeleistungsvorgabe derart durch, dass das Maß der Korrektur überproportional zur Annäherung des Ladezustandsistwerts an die Bereichsgrenzen ansteigt. Durch die überproportionale Korrektur wird in vorteilhafter Weise ein besonders zügiges und entschlossenes Gegensteuern erreicht, wenn der Ladezustandsistwert an eine der Bereichsgrenzen stößt.

Erfindungsgemäß führt die Vorgabeänderungseinrichtung die Änderung durch, indem sie für Ladezustandsistwerte oberhalb eines vorgegebenen oberen Korrekturstartwerts, der kleiner als die obere Bereichsgrenze ist, die Sollladeleistungsvorgabe überproportional zu dem Überschreiten des oberen Korrekturstartwerts reduziert und für Ladezustandsistwerte unterhalb eines vorgegebenen unteren Korrekturstartwerts, der größer als die untere Bereichsgrenze ist, die Sollladeleistungsvorgabe überproportional zu dem Unterschreiten des unteren Korrekturstartwerts erhöht.

Erfindungsgemäß weist die Leistungssteuereinrichtung eine Leistungsreduktionseinrichtung, eine Leistungserhöhungseinrichtung und eine Ausgangseinrichtung auf.

Bezüglich der Leistungsreduktion ist die erfindungsgemäße Leistungsreduktionseinrichtung ausgestaltet, in Abhängigkeit von dem Ladezustandsistwert und dem oberen Korrekturstartwert einen Leistungsreduktionsendwert zu ermitteln, wobei sie für Ladezustandsistwerte oberhalb des oberen Korrekturstartwerts die Leistungsreduktionsendwerte überproportional zur Differenz zwischen Ladezustandsistwert und oberem Korrekturstartwert erhöht.

Bezüglich einer Leistungserhöhung ist die erfindungsgemäße Leistungserhöhungseinrichtung ausgestaltet, in Abhängigkeit von dem Ladezustandsistwert und dem unteren Korrekturstartwert einen Leistungserhöhungsendwert zu ermitteln, wobei sie für Ladezustandsistwerte unterhalb des unteren Korrekturstartwerts die Leistungserhöhungsendwerte überproportional zur Differenz zwischen unterem Korrekturstartwert und Ladezustandsistwert erhöht.

Die Ausgangseinrichtung ist ferner erfindungsgemäß ausgestaltet, die korrigierte Ladeleistungsvorgabe zu bilden, indem sie von der Sollladeleistungsvorgabe den jeweiligen Leistungsreduktionsendwert subtrahiert und zu der Sollladeleistungsvorgabe den jeweiligen Leistungserhöhungsendwert addiert.

Nach einer auf der vorstehenden Weiterbildung basierenden weiteren Weiterbildung weist die Leistungsreduktionseinrichtung ein oberes Reduktionszwischenmodul auf, das durch Subtrahieren des oberen Korrekturstartwerts vom Ladezustandsistwert einen oberen Differenzwert ermittelt und mit dem oberen Differenzwert einen oberen Reduktionszwischenwert erzeugt unter Heranziehung einer oberen Reduktionsfunktion, die jedem oberen Differenzwert einen oberen Reduktionszwischenwert zuordnet, wobei die oberen Reduktionszwischenwerte mit ansteigenden oberen Differenzwerten proportional oder überproportional ansteigen.

Nach einer wiederum auf der vorstehenden Weiterbildung basierenden weiteren Weiterbildung weist die Leistungsreduktionseinrichtung einen oberen PI-Regler auf, in den eingangsseitig der jeweilige obere Reduktionszwischenwert eingespeist wird und der ausgangsseitig den Leistungsreduktionsendwert erzeugt, wobei der Maximalausgangswert des oberen PI-Reglers auf einen Maximalwert begrenzt ist, der der maximalen Ausgangsleistung der Energiequelle entspricht.

Nach einer weiteren Weiterbildung weist die Leistungserhöhungseinrichtung ein unteres Reduktionszwischenmodul auf, das durch Subtrahieren des Ladezustandsistwerts vom unteren Korrekturstartwert einen unteren Differenzwert ermittelt und mit dem unteren Differenzwert einen unteren Reduktionszwischenwert erzeugt unter Heranziehung einer unteren Reduktionsfunktion, die jedem unteren Differenzwert einen unteren Reduktionszwischenwert zuordnet, wobei die unteren Reduktionszwischenwerte mit ansteigenden unteren Differenzwerten proportional oder überproportional ansteigen.

Nach einer auf der vorstehenden Weiterbildung basierenden Weiterbildung weist die Leistungserhöhungseinrichtung einen unteren PI-Regler auf, in den eingangsseitig der jeweilige untere Reduktionszwischenwert eingespeist wird und der ausgangsseitig den Leistungserhöhungsendwert erzeugt, wobei der Maximalausgangswert des unteren PI-Reglers auf einen Maximalwert begrenzt ist, der der Differenz zwischen der maximalen Ausgangsleistung der Energiequelle und der Sollladeleistungsvorgabe entspricht.

Einer weiteren Weiterbildung zufolge sind die obere Reduktionsfunktion und/oder die untere Reduktionsfunktion stetig und differenzierbar, zumindest abschnittsweise differenzierbar, und sind die Reduktionszwischenwerte stets größer als Null.

Nach einer weiteren Weiterbildung gilt für die obere Reduktionsfunktion und/oder die untere Reduktionsfunktion insgesamt oder für zumindest einen ihrer Abschnitte:

$$df/dx > 0$$

und/oder

$$d^2f/dx^2 > 0$$

wobei f die obere bzw. untere Reduktionsfunktion bezeichnet.

Die Leistungssteuereinrichtung wird vorzugsweise in Fahrzeugen, insbesondere Schienenfahrzeugen eingesetzt. Bei Schienenfahrzeugen ist die erforderliche Leistung bzw. Energie für den Betrieb des Schienenfahrzeugs einschließlich des Antriebs sowie weiterer Hilfsbetriebe vergleichsweise gut prognostizierbar, sodass eine geeignete Sollleistungsvorgabe in der Regel gut prognostizierbar ist und die Korrektur der Sollleistungsvorgabe durch die Leistungssteuereinrichtung nur selten Eingriffe erfordert.

Nach einer vorteilhaften Weiterbildung ist die Energiequelle eine Brennstoffzelle und der genannte Energiespeicher eine Fahrzeugbatterie, wobei die Leistung der Brennstoffzelle durch die Leistungssteuereinrichtung gesteuert wird.

Das Sollband, die obere Bereichsgrenze und/oder die untere Bereichsgrenze werden beispielsweise zeit- und/oder ortsabhängig bzw. streckenabhängig festgelegt, um bei einer Fahrt des Fahrzeugs bzw. Schienenfahrzeugs den Betriebsbereich den jeweiligen Anforderungen anpassen zu können. So können beispielsweise die obere und untere Bereichsgrenze angehoben werden, wenn Bergauffahrten bevorstehen. Weiterhin können beispielsweise die obere und untere Bereichsgrenze abgesenkt werden, wenn Talfahrten bevorstehen und Bremsenergie absehbar zur Verfügung stehen wird.

Der obere Korrekturstartwert und der untere Korrekturstartwert werden beispielsweise an die obere und untere Bereichsgrenze angepasst, beispielsweise angehoben, wenn die jeweils zugeordnete Bereichsgrenze angehoben wird, und abgesenkt, wenn die jeweils zugeordnete Bereichsgrenze abgesenkt wird.

Die Leistungssteuereinrichtung kann eine Vorgabeeinrichtung aufweisen, die als Sollladeleistungsvorgabe eine Zeit- und/oder streckenabhängige Sollleistungsvorgabe berechnet.

Die Vorgabeeinrichtung kann die Sollleistungsvorgabe dabei beispielsweise auf Basis von Strecken- und/oder Fahrplandaten zeitbezogen über der Fahrzeit und/oder streckenbezogen über dem jeweiligen Streckenort für den jeweils befahrenen oder als nächstes zu befahrenden Streckenabschnitt des Fahrzeugs berechnen.

Bei der Berechnung der Sollladeleistungsvorgabe berücksichtigt die Vorgabeeinrichtung dabei vorzugsweise, dass die Sollladeleistungsvorgabe derart bemessen wird, dass der Energiespeicher einen Ladezustand aufweist, der einerseits in bestimmten Streckenteilabschnitten so klein ist, dass der Energiespeicher Bremsleistung aufnehmen kann, und andererseits in anderen Streckenteilabschnitten so hoch ist, dass der Energiespeicher beispielsweise bei längeren Bergauffahrten die hierfür erforderliche hohe Ausgangsleistung mit ausreichend Puffer und Leistungsreserve zur Verfügung stellen kann.

Ein zweiter Aspekt der Erfindung betrifft ein Fahrzeug, welches mit zumindest einer erfindungsgemäßen Leistungssteuereinrichtung ausgestattet ist.

Das Fahrzeug ist vorzugsweise als ein Schienenfahrzeug, insbesondere als eine Lokomotive oder ein Triebzug für den Regional- und Fernverkehr, ausgestaltet.

Nach einer Weiterbildung des erfindungsgemäßen Fahrzeugs weist die Leistungssteuereinrichtung eine Vorgabeeinrichtung auf, die die Sollladeleistungsvorgabe in Abhängigkeit von Streckendaten zumindest eines dem Schienenfahrzeug vorausliegenden Streckenabschnitts und/oder in Abhängigkeit von der Zeit berechnet.

Ein dritter Aspekt der Erfindung betrifft schließlich ein Verfahren zur Steuerung der elektrischen Ladeleistung einer Energiequelle, die zum Aufladen eines elektrischen Energiespeichers dient. Kennzeichnende wird eine Sollladeleistungsvorgabe in Abhängigkeit von einem jeweiligen Ladezustand des Energiespeichers unter Bildung einer korrigierten Ladeleistungsvorgabe geändert, wenn sich ein den Ladezustand angebender Ladezustandsistwert einer oberen oder unteren Bereichsgrenze eines vorgegebenen Sollbandes nähert. Dabei wird die Änderung von der Vorgabeänderungseinrichtung durchgeführt wird, indem sie für Ladezustandsistwerte oberhalb eines vorgegebenen oberen Korrekturstartwerts, der kleiner als die obere Bereichsgrenze ist, die Sollladeleistungsvorgabe überproportional zu dem Überschreiten des oberen Korrekturstartwerts reduziert und für Ladezustandsistwerte unterhalb eines vorgegebenen unteren Korrekturstartwerts, der größer als die untere Bereichsgrenze ist, die Sollladeleistungsvorgabe überproportional zu dem Unterschreiten des unteren Korrekturstartwerts erhöht, und die Leistungssteuereinrichtung eine Leistungsreduktionseinrichtung, eine Leistungserhöhungseinrichtung und eine Ausgangseinrichtung aufweist, wobei die Leistungsreduktionseinrichtung in Abhängigkeit von dem Ladezustandsistwert und dem oberen Korrekturstartwert einen Leistungsreduktionsendwert ermittelt, wobei sie für Ladezustandsistwerte oberhalb des oberen Korrekturstartwerts die Leistungsreduktionsendwerte überproportional zur Differenz zwischen Ladezustandsistwert und oberem Korrekturstartwert erhöht, die Leistungserhöhungseinrichtung in Abhängigkeit von dem Ladezustandsistwert und dem unteren Korrekturstartwert einen Leistungserhöhungsendwert ermittelt, wobei sie für Ladezustandsistwerte unterhalb des unteren Korrekturstartwerts die Leistungserhöhungsendwerte überproportional zur Differenz zwischen unterem Korrekturstartwert und Ladezustandsistwert erhöht, und die Ausgangseinrichtung die korrigierten Ladeleistungsvorgabe bildet, indem sie von der Sollladeleistungsvorgabe den jeweiligen Leistungsreduktionsendwert subtrahiert und zu der Sollladeleistungsvorgabe den jeweiligen Leistungserhöhungsendwert addiert.

Das Verfahren wird vorzugsweise mit der oben beschriebenen Leistungssteuereinrichtung und vorzugsweise in einem Fahrzeug, insbesondere einem Schienenfahrzeug, durchgeführt.

Die Erfindung wird nachfolgend anhand von Ausführungsbeispielen näher erläutert. Dabei zeigen:

Figur 1    ein Ausführungsbeispiel für ein erfindungsgemäßes Schienenfahrzeug,

Figur 2    einen Verlauf eines Sollbands über der Strecke eines zu befahrenden Streckenabschnitts,

Figur 3    ein Ausführungsbeispiel für eine Vorgabeänderungseinrichtung für das Schienenfahrzeug gemäß Figur 1,

Figur 4    ein weiteres Ausführungsbeispiel für eine Vorgabeänderungseinrichtung für das Schienenfahrzeug gemäß Figur 1, und

Figur 5    beispielhaft den Verlauf von Reduktionsfunktionen und die Verläufe von oberen und unteren Reduktionszwischenwerten in Abhängigkeit von Ladezustandsistwerten.

In den Figuren werden der Übersicht halber für identische oder vergleichbare Komponenten dieselben Bezugszeichen verwendet.

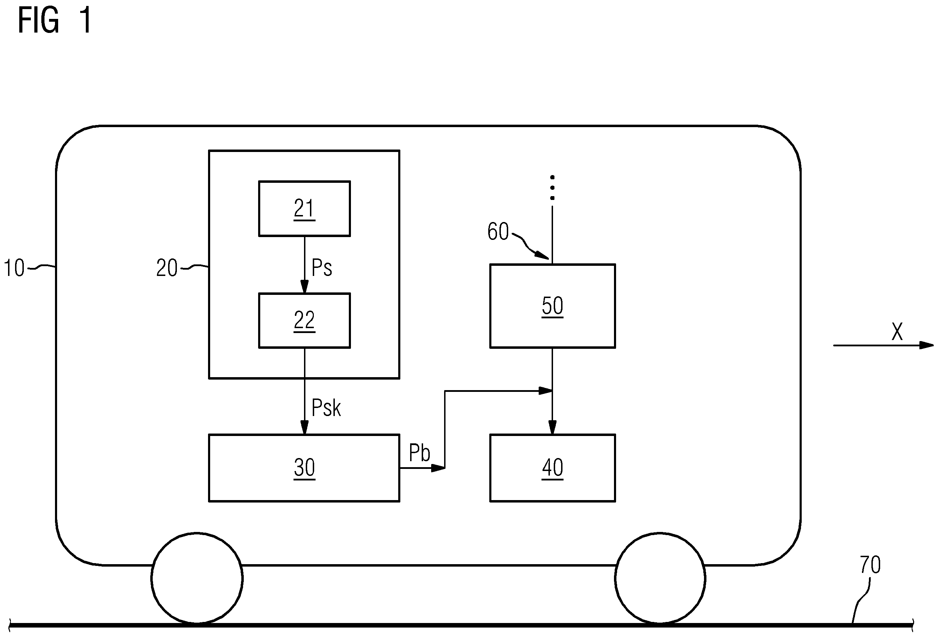

Die Figur 1 zeigt Bestandteile eines Ausführungsbeispiels für ein erfindungsgemäßes Fahrzeug 10, bei dem es sich vorzugsweise um ein Schienenfahrzeug handelt, da bei Schienenfahrzeugen das Fahrverhalten vergleichsweise gut prognostizierbar ist. Das Fahrzeug 10 ist mit einem Ausführungsbeispiel für eine erfindungsgemäße Leistungssteuereinrichtung 20 ausgestattet.

Die Leistungssteuereinrichtung 20 dient zur Steuerung der elektrischen Ladeleistung Pb einer Energiequelle in Form einer Brennstoffzelle 30, die wiederum zum Aufladen eines elektrischen Energiespeichers in Form einer Fahrzeugbatterie 40 dient.

Die Fahrzeugbatterie 40 kann über einen Umrichter oder Gleichspannungssteller 50 mit einem fahrzeuginternen Energieversorgungsnetz in Verbindung stehen, das beispielsweise einen Gleichspannungszwischenkreis 60 oder dergleichen umfassen kann. Das fahrzeuginterne Energieversorgungsnetz und daran angeschlossene weitere Komponenten des Fahrzeugs 10, wie beispielsweise Antriebsmotoren, weitere Umrichter usw. sind allgemein bekannt und daher aus Gründen der Übersicht in der Figur 1 nicht weiter dargestellt.

Die Leistungssteuereinrichtung 20 umfasst eine Vorgabeeinrichtung 21, die auf der Basis von Strecken- und/oder Fahrplandaten eine Sollladeleistungsvorgabe Ps zeitbezogen über der Fahrzeit und/oder streckenbezogen über dem jeweiligen Streckenort X für den jeweils befahrenen oder als nächstes zu befahrenden Streckenabschnitt 70 selbst berechnet oder in der die Sollladeleistungsvorgabe Ps fahrzeit- und/oder streckenbezogenen beispielsweise über dem jeweiligen Streckenort X zumindest abgespeichert ist. Bei der letzten Variante kann die Berechnung der Sollladeleistungsvorgabe Ps auch an anderer Stelle, beispielsweise auch außerhalb des Fahrzeugs 10, erfolgen oder bereits erfolgt sein.

Bei der Berechnung der Sollladeleistungsvorgabe Ps wird vorzugsweise berücksichtigt, dass die Brennstoffzellenleistung Pb derart eingestellt wird, dass die Fahrzeugbatterie 40 einen Ladezustand aufweist, der einerseits in bestimmten Streckenteilabschnitten so klein ist, dass die Fahrzeugbatterie 40 Bremsleistung aufnehmen kann, und andererseits in anderen Streckenteilabschnitten so hoch ist, dass die Fahrzeugbatterie 40 beispielsweise bei längeren Bergauffahrten die hierfür erforderliche hohe Ausgangsleistung mit ausreichend Puffer und Leistungsreserve zur Verfügung stellen kann. Bezüglich des letztgenannten Aspekts ist nämlich zu berücksichtigen, dass die Antriebsleistung des Fahrzeugs 10 bei Bergauffahrten die maximale Brennstoffzellenleistung Pb der Brennstoffzelle 30 oft deutlich überschreiten kann, sodass die Fahrzeugbatterie 40 die Differenz zwischen nötiger Antriebsleistung und maximaler Brennstoffzellenleistung Pb in einem solchen Falle zur Verfügung stellen können muss.

Um die genannten Ziele zu erreichen, wird die Sollladeleistungsvorgabe Ps für die Brennstoffzelle 30 zunächst ohne Rückkopplung bzw. ohne Überwachung berechnet, vorzugsweise unter Verwendung von Fahrplandaten und Streckendaten mit Höhenprofilen, da die letztgenannten Daten die Schätzung der zu erwartenden Leistungsanforderungen relativ genau ermöglichen.

Darüber hinaus wird bei der Berechnung der Sollladeleistungsvorgabe Ps vorzugsweise die Batterielebensdauer berücksichtigt und der Ladezustand der Batterie entsprechend gewählt. So ist es für die Batterielebensdauer nämlich vorteilhaft, wenn sich deren Ladezustand innerhalb bestimmter Grenzen bzw. innerhalb eines vorgegebenen Sollbandes SB bewegt und der maximal mögliche Ladezustand oder ein leerer Ladezustand möglichst selten auftreten.

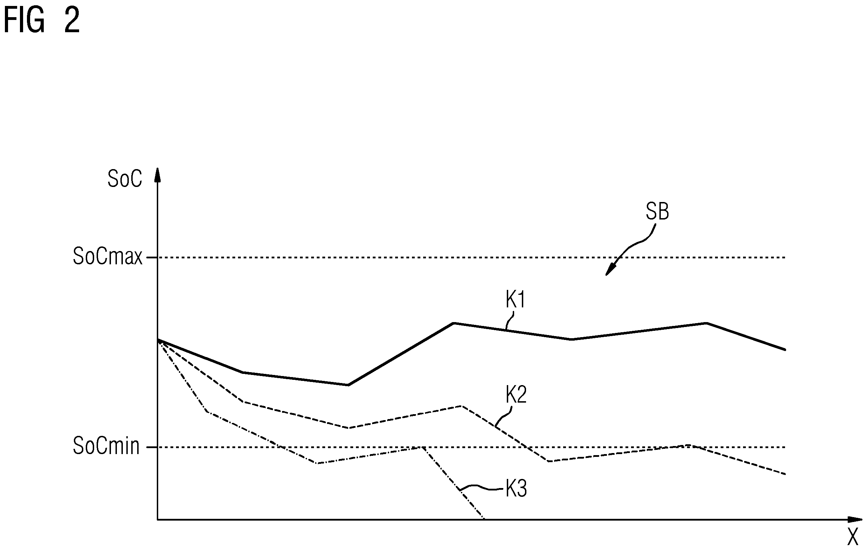

Die Figur 2 zeigt beispielhaft ein für einen zu befahrenden Streckenabschnitt 70 geeignetes Sollband SB, innerhalb dessen sich die Ladezustandsistwerte SoC während der Fahrt in Abhängigkeit vom jeweiligen Ort X befinden sollten, um eine möglichst hohe Batterielebensdauer zu erreichen. Das Sollband SB wird in Figur 2 durch eine obere Bereichsgrenze SoCmax und eine untere Bereichsgrenze SoCmin begrenzt bzw. definiert. Es ist ersichtlich, dass die Bereichsgrenzen SoCmax und SoCmin nicht konstant sein müssen, vielmehr werden sie vorzugsweise an das zu befahrende Streckenprofil und an vorgegebene Fahrzeiten angepasst, sodass die Bereichsgrenzen SoCmax und SoCmin und das Sollband SB also vorzugsweise zeit- und/oder streckenabhängig sind.

Theoretisch wäre es möglich, dass die Vorgabeeinrichtung 21 der Leistungssteuereinrichtung 20 die Leistungssteuerung der Brennstoffzelle 30 ganz allein durchführt, also die Steuerung ohne Rückkopplung bzw. ohne Überwachung erfolgt. Die Kurve K1 in Figur 2 zeigt beispielhaft den Verlauf der Ladezustandsistwerte SoC innerhalb des Sollbandes SB für den Fall, dass das Fahrzeug 10 genau so fährt bzw. es vom Fahrzeugführer tatsächlich so gesteuert wird, dass die bei der Berechnung der Sollladeleistungsvorgabe Ps zugrunde gelegten Annahmen tatsächlich eintreten.

In der Realität wird die Kurve K1 jedoch häufig verlassen, weil das Fahrzeug 10 anders betrieben wird oder werden muss, als bei der Berechnung der Solladeleistungsvorgabe Ps angenommen wurde. Dies kann dazu führen, dass sich der tatsächliche Ladezustand außerhalb der gewünschten Grenzen bewegt oder die Batterie sogar völlig entladen wird, wie die Kurven K2 und K3 beispielhaft zeigen.

Um auch im Falle eines nicht zur Solladeleistungsvorgabe Ps passenden tatsächlichen Fahrprofils einen Ladezustandsverlauf (SoC-Verlauf) zu gewährleisten, der sich innerhalb des gewünschten Sollbandes SB bewegt, ist vorgesehen, dass die Leistungssteuereinrichtung 20 zusätzlich eine Vorgabeänderungseinrichtung 22 aufweist, die dazu ausgebildet ist, die Sollladeleistungsvorgabe Ps der Vorgabeeinrichtung 21 in Abhängigkeit vom jeweiligen Ladezustand der Fahrzeugbatterie 40 unter Bildung einer korrigierten Ladeleistungsvorgabe Psk zu korrigieren, wenn sich der Ladezustandsistwert SoC der oberen oder unteren Bereichsgrenze SoCmax bzw. SoCmin des Sollbandes SB nähert.

Bei dem Ausführungsbeispiel gemäß Figur 1 wird die Vorgabeänderungseinrichtung 22 die Korrektur der Sollladeleistungsvorgabe Ps derart durchführen, dass das Maß der Korrektur überproportional zur Annäherung des Ladezustandsistwertes SoC an die Bereichsgrenzen SoCmax, SoCmin ansteigt. Eine solche überproportionale Korrektur erreicht die Vorgabeänderungseinrichtung 22 vorzugsweise, indem sie für Ladezustandsistwerte SoC oberhalb eines vorgegebenen oberen Korrekturstartwerts Kmax, der kleiner als die obere Bereichsgrenze SoCmax ist, die Sollladeleistungsvorgabe Ps überproportional zu dem Überschreiten des oberen Korrekturstartwerts Kmax reduziert. Für Ladezustandsistwerte SoC unterhalb eines vorgegebenen unteren Korrekturstartwerts Kmin, der größer als die untere Bereichsgrenze SoCmin ist, erhöht sie die Sollladeleistungsvorgabe Ps überproportional zu dem Unterschreiten des unteren Korrekturstartwerts Kmin. Die Korrekturstartwerte Kmax und Kmin können fest vorgegebene Konstanten sein. Alternativ können sie in Abhängigkeit von den Bereichsgrenzen SoCmax und SoCmin von der Vorgabeänderungseinrichtung 22 berechnet werden, beispielsweise gemäß:

$$Kmax = SoCmax - Q$$

und

$$Kmin = SoCmin + Q$$

und

wobei Q eine Konstante sein kann. Alternativ kann Q auch abhängig sein von der Differenz zwischen SoCmax und SoCmin, beispielsweise proportional sein zu dieser Differenz.

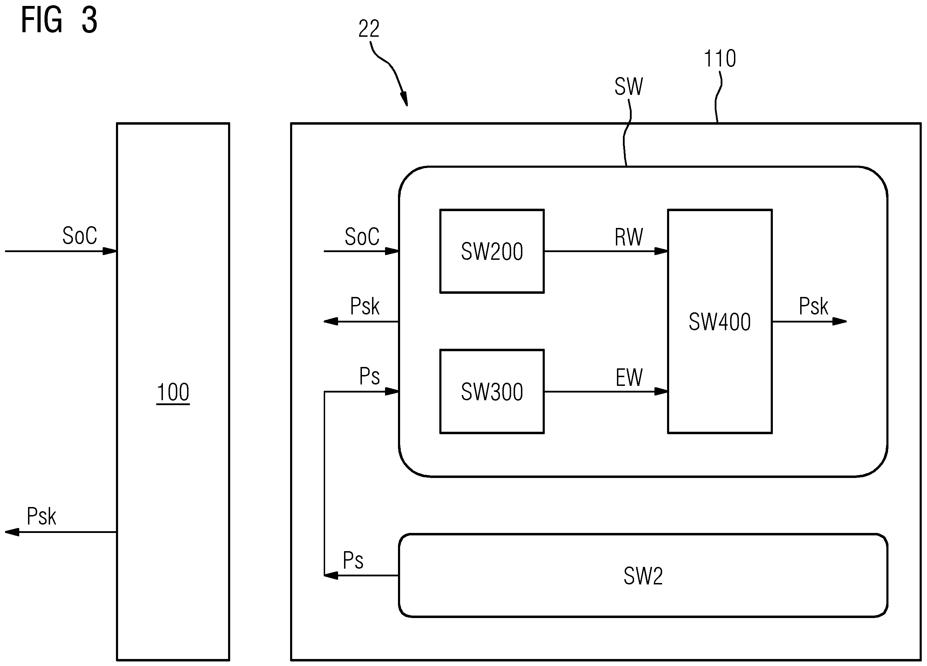

Die Figur 3 zeigt näher im Detail ein erstes Ausführungsbeispiel für eine Vorgabeänderungseinrichtung 22, die bei der Leistungssteuereinrichtung 20 gemäß Figur 1 eingesetzt werden kann. Die Vorgabeänderungseinrichtung 22 gemäß Figur 3 wird gebildet durch eine Recheneinrichtung 100 und einen Speicher 110. In dem Speicher 110 ist ein Softwareprogramm SW abgespeichert, das bei Ausführung durch die Recheneinrichtung 100 die Arbeitsweise der Vorgabeänderungseinrichtung 22 bestimmt.

Bei dem Ausführungsbeispiel umfasst das Softwareprogramm SW ein Leistungsreduktionsmodul SW200, das bei Ausführung durch die Recheneinrichtung 100 eine Leistungsreduktionseinrichtung bildet, ein Leistungserhöhungsmodul SW300, das bei Ausführung durch die Recheneinrichtung 100 eine Leistungserhöhungseinrichtung bildet, und ein Ausgangsmodul SW400, das bei Ausführung durch die Recheneinrichtung 100 eine Ausgangseinrichtung bildet.

Das Leistungsreduktionsmodul SW200 ermittelt in Abhängigkeit von dem jeweiligen Ladezustandsistwert SoC und dem jeweiligen oberen Korrekturstartwert Kmax einen Leistungsreduktionsendwert RW, wobei es für Ladezustandsistwerte SoC oberhalb des oberen Korrekturstartwerts Kmax die Leistungsreduktionsendwerte RW überproportional zur Differenz zwischen dem jeweiligen Ladezustandsistwert SoC und dem oberem Korrekturstartwert Kmax erhöht, beispielsweise gemäß folgender Gleichung:

$$RW = \begin{cases} (SoC - Kmax)^3 & für\ Kmax < SoC \leq 1 \\ 0 & für\ 0 \leq SoC \leq Kmax \end{cases}$$

Das Leistungserhöhungsmodul SW300 ermittelt in Abhängigkeit von dem Ladezustandsistwert SoC und dem unteren Korrekturstartwert Kmin einen Leistungserhöhungsendwert EW, wobei es für Ladezustandsistwerte SoC unterhalb des unteren Korrekturstartwerts Kmin die Leistungserhöhungsendwerte EW überproportional zur Differenz zwischen unterem Korrekturstartwert Kmin und Ladezustandsistwert SoC erhöht, beispielsweise gemäß folgender Gleichung:

$$EW = \begin{cases} (Kmin - SoC)^3 & für\ 0 \leq SoC < Kmin \\ 0 & für\ 1 \geq SoC \geq Kmin \end{cases}$$

Das Ausgangsmodul SW400 bildet die korrigierte Ladeleistungsvorgabe Psk, indem sie von der Sollladeleistungsvorgabe Ps den jeweiligen Leistungsreduktionsendwert RW subtrahiert und zu der Sollladeleistungsvorgabe Ps den jeweiligen Leistungserhöhungsendwert EW addiert, also vorzugsweise gemäß

$$Psk = Ps + EW - RW$$

Der oben angegebene Leistungserhöhungsendwert EW und/oder der oben angegebene untere Leistungsreduktionsendwert RW können auch anders berechnet werden, vorteilhaft ist es jedoch, wenn die herangezogenen Berechnungsfunktionen stetig und differenzierbar, zumindest abschnittsweise differenzierbar, sind und die Leistungserhöhungsendwerte EW und die Leistungsreduktionsendwerte RW Null nicht unterschreiten.

Die Recheneinrichtung 100 und der Speicher 110 können im Übrigen auch die Vorgabeeinrichtung 21 und damit die gesamte Leistungssteuereinrichtung 20 bilden, wenn beispielsweise in dem Speicher 110 ein weiteres Softwareprogramm SW2 abgespeichert ist, das bei Ausführung durch die Recheneinrichtung 100 die Funktion der Vorgabeeinrichtung 21 übernimmt.

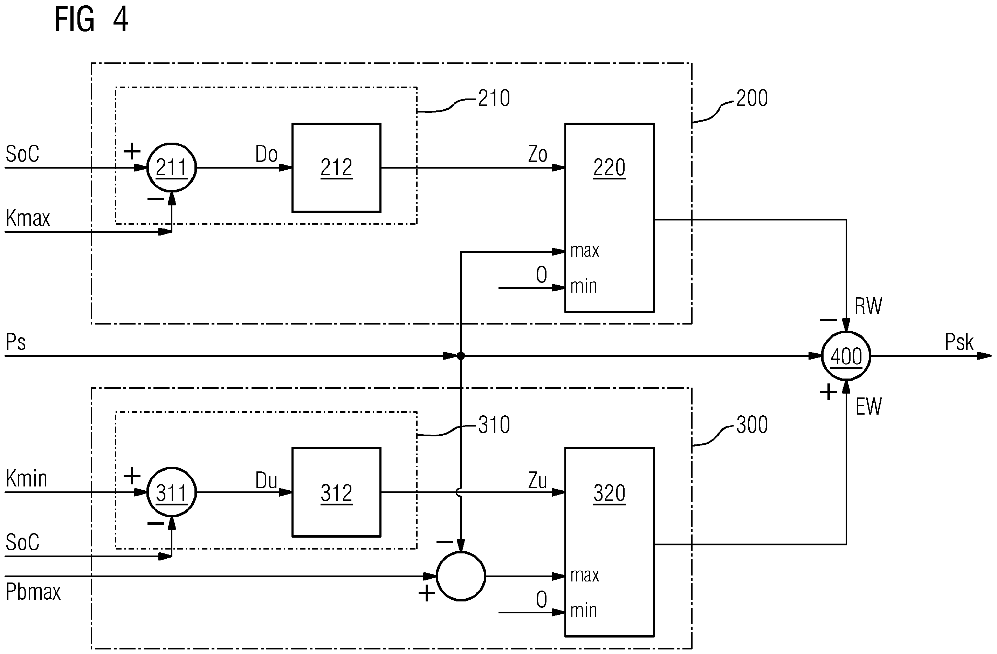

Die Figur 4 zeigt ein zweites Ausführungsbeispiel für eine Vorgabeänderungseinrichtung 22, die bei der Leistungssteuereinrichtung 20 gemäß Figur 1 eingesetzt werden kann, näher im Detail. Die Vorgabeänderungseinrichtung 22 umfasst eine Leistungsreduktionseinrichtung 200, eine Leistungserhöhungseinrichtung 300 und eine Ausgangseinrichtung 400, die - analog zu dem ersten Ausführungsbeispiel gemäß der Figur 3 - als Softwaremodule realisiert sein können, die von einer Recheneinrichtung 100, wie in Figur 3 gezeigt, ausgeführt werden.

Die Leistungsreduktionseinrichtung 200 weist ein oberes Reduktionszwischenmodul 210 auf, das durch Subtrahieren des oberen Korrekturstartwerts Kmax vom Ladezustandsistwert SoC mittels eines Differenzbildners 211 einen oberen Differenzwert Do ermittelt und mit dem oberen Differenzwert Do mittels eines Reduktionszwischenblocks 212 einen oberen Reduktionszwischenwert Zo erzeugt, und zwar unter Heranziehung einer oberen Reduktionsfunktion, die jedem oberen Differenzwert Do einen oberen Reduktionszwischenwert Zo zuordnet, wobei die oberen Reduktionszwischenwerte Zo mit ansteigenden oberen Differenzwerten Zo proportional oder überproportional ansteigen. Die oberen Reduktionszwischenwerte Zo werden vorzugsweise wie folgt berechnet:

$$Zo = \begin{cases} (SoC - Kmax)^2 & f\ddot{u}r\ Kmax < SoC \leq 1 \\ 0 & f\ddot{u}r\ 0 \leq SoC \leq Kmax \end{cases}$$

Darüber hinaus weist die Leistungsreduktionseinrichtung 200 einen oberen PI-Regler 220 auf, in den eingangsseitig der jeweilige obere Reduktionszwischenwert Zo eingespeist wird und der ausgangsseitig den Leistungsreduktionsendwert RW erzeugt. Der Maximalausgangswert des oberen PI-Reglers 220 ist dabei auf einen Maximalwert max begrenzt, der der maximalen Ausgangsleistung Pbmax der Brennstoffzelle 30 entspricht. Der Minimalausgangswert des unteren PI-Reglers 220 wird auf einen Minimalwert min von Null begrenzt.

Die Leistungserhöhungseinrichtung 300 weist bei dem Ausführungsbeispiel gemäß Figur 4 ein unteres Reduktionszwischenmodul 310 auf, das durch Subtrahieren des Ladezustandsistwerts SoC vom unteren Korrekturstartwert Kmin mittels eines Differenzbildners 311 einen unteren Differenzwert Du ermittelt und mit dem unteren Differenzwert Du mittels eines Erhöhungszwischenblocks 312 einen unteren Reduktionszwischenwert Zu erzeugt, und zwar unter Heranziehung einer unteren Reduktionsfunktion, die jedem unteren Differenzwert Du einen unteren Reduktionszwischenwert Zu zuordnet, wobei die unteren Reduktionszwischenwerte Zu mit ansteigenden unteren Differenzwerten Du proportional oder überproportional ansteigen. Die unteren Reduktionszwischenwerte Zu werden vorzugsweise wie folgt berechnet:

$$Zu = \begin{cases} (Kmin - SoC)^2 & f\ddot{u}r\ 0 \leq SoC < Kmin \\ 0 & f\ddot{u}r\ 1 \geq SoC \geq Kmin \end{cases}$$

Darüber hinaus umfasst die Leistungserhöhungseinrichtung 300 einen unteren PI-Reglers 320, in den eingangsseitig der jeweilige untere Reduktionszwischenwert Zu eingespeist wird und der ausgangsseitig den Leistungserhöhungsendwert EW erzeugt. Der Maximalausgangswert des unteren PI-Reglers 320 wird auf einen Maximalwert max begrenzt, der der Differenz zwischen der maximalen Ausgangsleistung der Energiequelle und der Sollladeleistungsvorgabe Ps entspricht. Der Minimalausgangswert des unteren PI-Reglers 320 wird auf einen Minimalwert min von Null begrenzt.

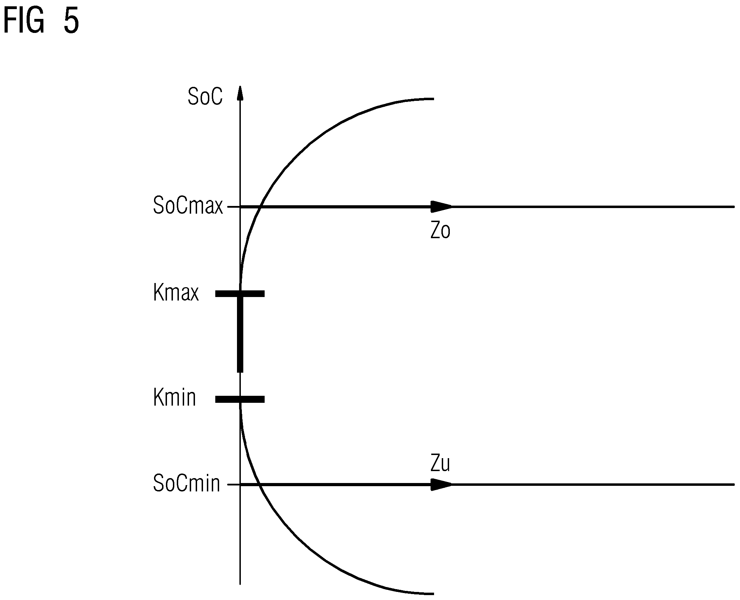

Die Figur 5 zeigt beispielhaft den Verlauf der Reduktionsfunktionen und die Verläufe der oberen und unteren Reduktionszwischenwerte Zo und Zu in Abhängigkeit von den jeweiligen Ladezustandsistwerten SoC.

Die oben angegebene obere Reduktionsfunktion und/oder die oben angegebene untere Reduktionsfunktion können auch anders aussehen. Vorteilhaft ist es jedoch, wenn die Reduktionsfunktionen stetig und differenzierbar, zumindest abschnittsweise differenzierbar, sind und die Reduktionszwischenwerte Zo und Zu stets größer als Null sind.

Besonders vorteilhaft ist es, wenn für die obere Reduktionsfunktion und/oder die untere Reduktionsfunktion insgesamt oder für zumindest einen ihrer Abschnitte gilt:

```
df/dx > 0
```

und/oder

```
d2f/dx2 > 0
```

wobei f die obere bzw. untere Reduktionsfunktion bezeichnet.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

**Patentansprüche**

1. Leistungssteuereinrichtung (20) zur Steuerung einer elektrischen Ladeleistung (Pb) einer Energiequelle, die zum Aufladen eines elektrischen Energiespeichers dient, wobei die Leistungssteuereinrichtung (20) eine Vorgabeänderungseinrichtung (22) aufweist, die dazu ausgebildet ist, eine Sollladeleistungsvorgabe (Ps) in Abhängigkeit von einem jeweiligen Ladezustand des Energiespeichers unter Bildung einer korrigierten Ladeleistungsvorgabe (Psk) zu ändern, wenn sich ein den Ladezustand angebender Ladezustandsistwert SoC (SoC) einer oberen oder unteren Bereichsgrenze (SoCmax, SoCmin) eines vorgegebenen Sollbandes (SB) nähert
**dadurch gekennzeichnet, dass**

   die Vorgabeänderungseinrichtung (22) die Änderung durchführt, indem sie

   - für Ladezustandsistwerte (SoC) oberhalb eines vorgegebenen oberen Korrekturstartwerts (Kmax), der kleiner als die obere Bereichsgrenze (SoCmax) ist, die Sollladeleistungsvorgabe (Ps) überproportional zu dem Überschreiten des oberen Korrekturstartwerts (Kmax) reduziert und
   - für Ladezustandsistwerte (SoC) unterhalb eines vorgegebenen unteren Korrekturstartwerts (Kmin), der größer als die untere Bereichsgrenze (SoCmin) ist, die Sollladeleistungsvorgabe (Ps) überproportional zu dem Unterschreiten des unteren Korrekturstartwerts (Kmin) erhöht,

   die Leistungssteuereinrichtung (20) eine Leistungsreduktionseinrichtung (200), eine Leistungserhöhungseinrichtung (300) und eine Ausgangseinrichtung (400) aufweist, wobei

   - die Leistungsreduktionseinrichtung (200) ausgestaltet ist, in Abhängigkeit von dem Ladezustandsistwert (SoC) und dem oberen Korrekturstartwert (Kmax) einen Leistungsreduktionsendwert (RW) zu ermitteln, wobei sie für Ladezustandsistwerte (SoC) oberhalb des oberen Korrekturstartwerts Kmax (Kmax) die Leistungsreduktionsendwerte RW (RW) überproportional zur Differenz zwischen Ladezustandsistwert (SoC) und oberem Korrekturstartwert (Kmax) erhöht, wobei insbesondere gilt:

$$RW = \begin{cases} (SoC - Kmax)^3 & \text{für } Kmax < SoC \leq 1 \\ 0 & \text{für } 0 \leq SoC \leq Kmax \end{cases}$$

   - die Leistungserhöhungseinrichtung (300) ausgestaltet ist, in Abhängigkeit von dem Ladezustandsistwert (SoC) und dem unteren Korrekturstartwert Kmin (Kmin) einen Leistungserhöhungsendwert EW zu ermitteln, wobei sie für Ladezustandsistwerte (SoC) unterhalb des unteren Korrekturstartwerts (Kmin) die Leistungserhöhungsendwerte EW überproportional zur Differenz zwischen unterem Korrekturstartwert (Kmin) und Ladezustandsistwert (SoC) erhöht, wobei insbesondere gilt:

$$EW = \begin{cases} (Kmin - SoC)^3 & \text{für } 0 \leq SoC < Kmin \\ 0 & \text{für } 1 \geq SoC \geq Kmin \end{cases}$$

   - und die Ausgangseinrichtung (400) ausgestaltet ist, die korrigierten Ladeleistungsvorgabe (Psk) zu bilden, indem sie von der Sollladeleistungsvorgabe (Ps) den jeweiligen Leistungsreduktionsendwert (RW) subtrahiert und zu der Sollladeleistungsvorgabe (Ps) den jeweiligen Leistungserhöhungsendwert EW addiert.

2. Leistungssteuereinrichtung (20) nach Anspruch 1,
**dadurch gekennzeichnet, dass**
die Vorgabeänderungseinrichtung (22) die Korrektur der Sollladeleistungsvorgabe (Ps) derart durchführt, dass das Maß der Änderung überproportional zur Annäherung des Ladezustandsistwerts (SoC) an die Bereichsgrenzen (SoCmax, SoCmin) ansteigt.

3. Leistungssteuereinrichtung (20) nach Anspruch 1,

**dadurch gekennzeichnet, dass**
die Leistungsreduktionseinrichtung (200) ein oberes Reduktionszwischenmodul (210) aufweist, das durch Subtrahieren des oberen Korrekturstartwerts (Kmax) vom Ladezustandsistwert (SoC) einen oberen Differenzwert (Do) ermittelt und mit dem oberen Differenzwert (Do) einen oberen Reduktionszwischenwert Zo (Zo) erzeugt unter Heranziehung einer oberen Reduktionsfunktion, die jedem oberen Differenzwert (Do) einen oberen Reduktionszwischenwert (Zo) zuordnet, wobei die oberen Reduktionszwischenwerte (Zo) mit ansteigenden oberen Differenzwerten (Do) proportional oder überproportional ansteigen, wobei insbesondere gilt:

$$Zo = \begin{cases} (SoC - Kmax)^2 & f\ddot{u}r\ Kmax < SoC \leq 1 \\ 0 & f\ddot{u}r\ 0 \leq SoC \leq Kmax \end{cases}$$

.

4. Leistungssteuereinrichtung (20) nach Anspruch 3,
**dadurch gekennzeichnet, dass**
die Leistungsreduktionseinrichtung (200) einen oberen PI-Regler (220) aufweist, in den eingangsseitig der jeweilige obere Reduktionszwischenwert (Zo) eingespeist wird und der ausgangsseitig den Leistungsreduktionsendwert (RW) erzeugt, wobei der Maximalausgangswert des oberen PI-Reglers (220) auf einen Maximalwert begrenzt ist, der der maximalen Ausgangsleistung der Energiequelle entspricht.

5. Leistungssteuereinrichtung (20) nach einem der vorstehenden Ansprüche,
**dadurch gekennzeichnet, dass**
die Leistungserhöhungseinrichtung (300) ein unteres Reduktionszwischenmodul (310) aufweist, das durch Subtrahieren des Ladezustandsistwerts (SoC) vom unteren Korrekturstartwert (Kmin) einen unteren Differenzwert (Du) ermittelt und mit dem unteren Differenzwert (Du) einen unteren Reduktionszwischenwert (Zu) erzeugt unter Heranziehung einer unteren Reduktionsfunktion, die jedem unteren Differenzwert (Du) einen unteren Reduktionszwischenwert (Zu) zuordnet, wobei die unteren Reduktionszwischenwerte (Zu) mit ansteigenden unteren Differenzwerten (Du) proportional oder überproportional ansteigen, wobei insbesondere gilt

$$Zu = \begin{cases} (Kmin - SoC)^2 & f\ddot{u}r\ 0 \leq SoC < Kmin \\ 0 & f\ddot{u}r\ 1 \geq SoC \geq Kmin \end{cases}$$

.

6. Leistungssteuereinrichtung (20) nach Anspruch 5,
**dadurch gekennzeichnet, dass**
die Leistungserhöhungseinrichtung (300) einen unteren PI-Regler (320) aufweist, in den eingangsseitig der jeweilige untere Reduktionszwischenwert (Zu) eingespeist wird und der ausgangsseitig den Leistungserhöhungsendwert (EW) erzeugt, wobei der Maximalausgangswert des unteren PI-Reglers (320) auf einen Maximalwert begrenzt ist, der der Differenz zwischen der maximalen Ausgangsleistung der Energiequelle und der Sollladeleistungsvorgabe (Ps) entspricht.

7. Leistungssteuereinrichtung (20) nach Anspruch 3,
**dadurch gekennzeichnet, dass**
die obere Reduktionsfunktion und/oder die untere Reduktionsfunktion stetig und differenzierbar, zumindest abschnittsweise differenzierbar, sind und die Reduktionszwischenwerte (Zo, Zu) stets größer als Null sind.

8. Leistungssteuereinrichtung (20) nach Anspruch 3 oder 7,
**dadurch gekennzeichnet, dass**
für die obere Reduktionsfunktion und/oder die untere Reduktionsfunktion insgesamt oder für zumindest einen ihrer Abschnitte gilt:

```
df/dx > 0
```

und/oder

$$\mathrm{d}^2\mathrm{f}/\mathrm{dx}^2 > 0$$

wobei f die obere bzw. untere Reduktionsfunktion bezeichnet.

9. Leistungssteuereinrichtung (20) nach einem der vorstehenden Ansprüche,
**dadurch gekennzeichnet, dass**
die genannte Energiequelle eine Brennstoffzelle (30) und der genannte Energiespeicher eine Fahrzeugbatterie (40) ist, wobei die Leistung der Brennstoffzelle (30) durch die Leistungssteuereinrichtung (20) gesteuert wird.

10. Fahrzeug (10),
**dadurch gekennzeichnet, dass**
das Fahrzeug (10) mit zumindest einer Leistungssteuereinrichtung (20) nach einem der voranstehenden Ansprüche ausgestattet ist.

11. Fahrzeug (10) nach Anspruch 10,
**dadurch gekennzeichnet, dass**
die Leistungssteuereinrichtung (20) eine Vorgabeeinrichtung (21) aufweist, die die Sollladeleistungsvorgabe (Ps) in Abhängigkeit von Streckendaten zumindest eines dem Fahrzeug (10) vorausliegenden Streckenabschnitts (70) und/oder in Abhängigkeit von der Zeit berechnet.

12. Verfahren zur Steuerung einer elektrischen Ladeleistung (Pb) einer Energiequelle, die zum Aufladen eines elektrischen Energiespeichers dient, wobei

eine Sollladeleistungsvorgabe (Ps) in Abhängigkeit von einem jeweiligen Ladezustand des Energiespeichers unter Bildung einer korrigierten Ladeleistungsvorgabe (Psk) geändert wird, wenn sich ein den Ladezustand angebender Ladezustandsistwert SoC (SoC) einer oberen oder unteren Bereichsgrenze (SoCmax, SoCmin) eines vorgegebenen Sollbandes (SB) nähert
**dadurch gekennzeichnet, dass**
von der Vorgabeänderungseinrichtung (22) die Änderung durchgeführt wird, indem sie

- für Ladezustandsistwerte (SoC) oberhalb eines vorgegebenen oberen Korrekturstartwerts (Kmax), der kleiner als die obere Bereichsgrenze (SoCmax) ist, die Sollladeleistungsvorgabe (Ps) überproportional zu dem Überschreiten des oberen Korrekturstartwerts (Kmax) reduziert und
- für Ladezustandsistwerte (SoC) unterhalb eines vorgegebenen unteren Korrekturstartwerts (Kmin), der größer als die untere Bereichsgrenze (SoCmin) ist, die Sollladeleistungsvorgabe (Ps) überproportional zu dem Unterschreiten des unteren Korrekturstartwerts (Kmin) erhöht,

die Leistungssteuereinrichtung (20) eine Leistungsreduktionseinrichtung (200), eine Leistungserhöhungseinrichtung (300) und eine Ausgangseinrichtung (400) aufweist, wobei

- die Leistungsreduktionseinrichtung (200) in Abhängigkeit von dem Ladezustandsistwert (SoC) und dem oberen Korrekturstartwert (Kmax) einen Leistungsreduktionsendwert (RW) ermittelt, wobei sie für Ladezustandsistwerte (SoC) oberhalb des oberen Korrekturstartwerts Kmax (Kmax) die Leistungsreduktionsendwerte RW (RW) überproportional zur Differenz zwischen Ladezustandsistwert (SoC) und oberem Korrekturstartwert (Kmax) erhöht, wobei insbesondere gilt:

$$RW = \begin{cases} (SoC - Kmax)^3 & f\ddot{u}r\, Kmax < SoC \leq 1 \\ 0 & f\ddot{u}r\, 0 \leq SoC \leq Kmax \end{cases}$$

- die Leistungserhöhungseinrichtung (300) in Abhängigkeit von dem Ladezustandsistwert (SoC) und dem unteren Korrekturstartwert Kmin (Kmin) einen Leistungserhöhungsendwert EW ermittelt, wobei sie für Ladezustandsistwerte (SoC) unterhalb des unteren Korrekturstartwerts (Kmin) die Leistungserhöhungsendwerte EW überproportional zur Differenz zwischen unterem Korrekturstartwert (Kmin) und Ladezustandsistwert (SoC) erhöht, wobei insbesondere gilt:

$$EW = \begin{cases} (Kmin - SoC)^3 & für\ 0 \leq SoC < Kmin \\ 0 & für\ 1 \geq SoC \geq Kmin \end{cases}$$

- und die Ausgangseinrichtung (400) die korrigierten Ladeleistungsvorgabe (Psk) bildet, indem sie von der Sollladeleistungsvorgabe (Ps) den jeweiligen Leistungsreduktionsendwert (RW) subtrahiert und zu der Sollladeleistungsvorgabe (Ps) den jeweiligen Leistungserhöhungsendwert EW addiert.

**Claims**

1. Power control device (20) for controlling an electrical charging power (Pb) of a power source which serves for charging an electrical energy storage unit, wherein the power control device (20) has a specification amendment facility (22) which is designed to amend a target charging power specification (Ps) as a function of a respective state of charge of the energy storage unit by forming a corrected charging power specification (Psk), if an actual value of a state of charge SoC (SoC) which specifies the state of charge approaches an upper or lower range limit (SoCmax, SoCmin) of a predefined target band (SB),
**characterised in that**

the specification amendment facility (22) carries out the amendment
**in that** it

- reduces the target charging power specification (Ps) disproportionately relative to the exceeding of the upper correction starting value (Kmax) for actual values of a state of charge (SoC) above a predefined upper correction starting value (Kmax) which is smaller than the upper range limit (SoCmax) and
- increases the target charging power specification (Ps) disproportionately relative to the undershooting of the lower correction starting value (Kmin) for actual values of a state of charge (SoC) below a predefined lower correction starting value (Kmin) which is larger than the lower range limit (SoCmin),

the power control device (20) has a power-reducing facility (200), a power-increasing facility (300) and an output facility (400), wherein

- the power-reducing facility (200) is designed to determine a power reduction end value (RW) as a function of the actual value of a state of charge (SoC) and the upper correction starting value (Kmax), wherein, for actual values of a state of charge (SoC) above the upper correction starting value Kmax (Kmax), the specification amendment facility increases the power reduction end value (RW) disproportionately relative to the difference between actual value of a state of charge (SoC) and upper correction starting value (Kmax), wherein, in particular, the following applies:

$$RW = \begin{cases} (SoC - Kmax)^3 & for\ Kmax < SoC \leq 1 \\ 0 & for\ 0 \leq SoC \leq Kmax \end{cases}$$

- the power-increasing facility (300) is designed to determine a power increase end value EW as a function of the actual value of a state of charge (SoC) and the lower correction starting value Kmin (Kmin), wherein, for actual values of a state of charge (SoC) below the lower correction starting value (Kmin), the specification amendment facility increases the power increase end values EW disproportionately relative to the difference between lower correction starting value (Kmin) and actual value of a state of charge (SoC), wherein, in particular, the following applies:

$$EW = \begin{cases} (Kmin - SoC)^3 & for\ 0 \leq SoC < Kmin \\ 0 & for\ 1 \leq SoC \leq Kmin \end{cases}$$

- and the output facility (400) is designed to form the corrected charging power specification (Psk), **in that** it subtracts the respective power reduction end value (RW) from the target charging power specification (Ps) and adds the respective power increase end value EW to the target charging power specification (Ps).

2. Power control device (20) according to claim 1,

**characterised in that**

the specification amendment facility (22) carries out the correction of the target charging power specification (Ps) such that the degree of amendment increases disproportionately relative to the approaching of the actual value of a state of charge (SoC) to the range limits (SoCmax, SoCmin).

3. Power control device (20) according to claim 1,
   **characterised in that**
   the power-reducing facility (200) has an upper reduction intermediate module (210) which determines an upper difference value (Do) by subtracting the upper correction starting value (Kmax) from the actual value of a state of charge (SoC) and generates an upper reduction intermediate value Zo (Zo) with the upper difference value (Do) using an upper reduction function, which assigns an upper reduction intermediate value (Zo) to the respective upper difference value (Do), wherein the upper reduction intermediate values (Zo) increase proportionately or disproportionately with increasing upper difference values (Do), wherein, in particular, the following applies:

$$Zo = \begin{cases} (SoC - Kmax)^2 & for\ Kmax < SoC \leq 1 \\ 0 & for\ 0 \leq SoC \leq Kmax \end{cases}$$

4. Power control device (20) according to claim 3,
   **characterised in that**
   the power-reducing facility (200) has an upper PI controller (220), into which the respective upper reduction intermediate value (Zo) is fed on the input side and which generates the power reduction end value (RW) on the output side, wherein the maximum output value of the upper PI controller (220) is limited to a maximum value which corresponds to the maximum output power of the power source.

5. Power control device (20) according to one of the preceding claims,
   **characterised in that**
   the power-increasing facility (300) has a lower reduction intermediate module (310) which determines a lower difference value (Du) by subtracting the actual value of a state of charge (SoC) from the lower correction starting value (Kmin) and which generates a lower reduction intermediate value (Zu) with the lower difference value (Du) using a lower reduction function which assigns a lower reduction intermediate value (Zu) to the respective lower difference value (Du), wherein the lower reduction intermediate values (Zu) increase proportionately or disproportionately with increasing lower difference values (Du), wherein, in particular, the following applies:

$$Zu = \begin{cases} (Kmin - SoC)^2 & for\ 0 \leq SoC \leq Kmin \\ 0 & for\ 1 \leq SoC \leq Kmin \end{cases}$$

6. Power control device (20) according to claim 5,
   **characterised in that**
   the power-increasing facility (300) has a lower PI controller (320) into which the respective lower reduction intermediate value (Zu) is fed on the input side and which generates the power increase end value (EW) on the output side, wherein the maximum output value of the lower PI controller (320) is limited to a maximum value which corresponds to the difference between the maximum output power of the power source and the target charging power specification (Ps).

7. Power control device (20) according to claim **3**,
   **characterised in that**
   the upper reduction function and/or the lower reduction function are continuous and can be differentiated, at least in part, and the reduction intermediate values (Zo, Zu) are always greater than zero.

8. Power control device (20) according to claim 3 or **7**,
   **characterised in that**

   the following applies for the upper reduction function and/or the lower reduction function as a whole or for at least a part thereof:

   ```
   df/dx > 0
   ```

and/or

$$d^2f/dx^2 > 0$$

wherein f represents the upper or lower reduction function.

9. Power control device (20) according to one of the preceding claims,
   **characterised in that**
   the power source mentioned is a fuel cell (30) and the energy storage unit mentioned is a vehicle battery (40), wherein the power of the fuel cell (30) is controlled by way of the power control device (20).

10. Vehicle (10),
    **characterised in that**
    the vehicle (10) is equipped with at least one power control device (20) according to one of the preceding claims.

11. Vehicle (10) according to claim 10,
    **characterised in that**
    the power control device (20) has a specification facility (21) which calculates the target charging power specification (Ps) as a function of route data of at least a route section (70) lying ahead of the vehicle (10) and/or as a function of the time.

12. Method for controlling an electrical charging power (Pb) of a power source which serves for charging an electrical energy storage unit, wherein a target charging power specification (Ps) is amended independently of a respective state of charge of the energy storage unit by forming a corrected charging power specification (Psk), if an actual value of a state of charge SoC (SoC) which specifies the state of charge approaches an upper or lower range limit (SoCmax, SoCmin) of a predefined target band (SB),
    **characterised in that**

    the amendment is carried out by the specification amendment facility (22)
    **in that** it

    - reduces the target charging power specification (Ps) disproportionately relative to the exceeding of the upper correction starting value (Kmax) for actual values of a state of charge (SoC) above a predefined upper correction starting value (Kmax) which is smaller than the upper range limit (SoCmax) and
    - increases the target charging power specification (Ps) disproportionately relative to the undershooting of the lower correction starting value (Kmin) for actual values of a state of charge (SoC) below a predefined lower correction starting value (Kmin) which is larger than the lower range limit (SoCmin),

    the power control device (20) has a power-reducing facility (200), a power-increasing facility (300) and an output facility (400), wherein

    - the power-reducing facility (200) determines a power reduction end value (RW) as a function of the actual value of a state of charge (SoC) and the upper correction starting value (Kmax), wherein the specification amendment facility increases the power reduction end values RW (RW) disproportionately relative to the difference between actual value of a state of charge (SoC) and upper correction starting value (Kmax) for actual values of a state of charge (SoC) above the upper correction starting value (Kmax), wherein, in particular, the following applies:

    $$RW = \begin{cases} (SoC - Kmax)^3 & for\ Kmax < SoC \le 1 \\ 0 & for\ 0 \le SoC \le Kmax \end{cases}$$

    - the power-increasing facility (300) determines a power increase end value EW as a function of the actual value of a state of charge (SoC) and the lower correction starting value Kmin (Kmin), wherein, for actual values of a state of charge (SoC) below the lower correction starting value (Kmin), the specification amendment facility increases the power increase end values EW disproportionately relative to the difference between lower correction starting value (Kmin) and actual value of a state of charge (SoC), wherein, in particular, the following applies:

$$EW = \begin{cases} (Kmin - SoC)^3 \; for \; 0 \leq SoC < Kmin \\ 0 \quad\quad\quad for \; 1 \leq SoC \leq Kmin \end{cases}$$

- and the output facility (400) forms the corrected charging power specification (Psk), **in that** it subtracts the respective power reduction end value (RW) from the target charging power specification (Ps) and adds the respective power increase end value EW to the target charging power specification (Ps).

**Revendications**

1. Dispositif (20) de commande de la puissance pour la commande d'une puissance (Pb) de charge électrique d'une source d'énergie, qui sert à charger un accumulateur d'énergie électrique, dans lequel le dispositif (20) de commande de puissance a un dispositif (22) de modification de prescription, qui est constitué pour modifier, avec formation d'une prescription (Psk) de puissance de charge corrigée, une prescription (Ps) de consigne de puissance de charge, en fonction d'un état de charge respectif de l'accumulateur d'énergie, si une valeur SoC (SoC) réelle d'état de charge indiquant l'état de charge se rapproche d'une limite (SoCmax, SoCmin) supérieure ou inférieure de plage d'une bande (SB) de consigne donnée à l'avance,
**caractérisé en ce que**

le dispositif (22) de modification de prescription effectue la modification, par le fait qu'il,

- pour des valeurs (SoC) réelles de l'état de charge au-dessus d'une valeur (Kmax) supérieure initiale de correction donnée à l'avance, qui est plus petite que la limite (SoCmax) supérieure de la plage, réduit la prescription (Ps) de consigne de puissance de charge plus que proportionnellement au dépassement de la valeur (Kmax) supérieure initiale de correction, et
- pour des valeurs (SoC) réelles de l'état de charge inférieures à une valeur (Kmin) inférieure de correction initiale donnée à l'avance, qui est plus grande que la limite (SoCmin) inférieure de la plage, augmente la prescription (Ps) de consigne de puissance de charge plus que proportionnellement au sous-dépassement de la valeur (Kmin) inférieure initiale de correction,

le dispositif (20) de commande de la puissance a un dispositif (200) de réduction de la puissance, un dispositif (300) d'augmentation de la puissance et un dispositif (400) de sortie, dans lequel

- le dispositif (200) de réduction de la puissance est conformé pour déterminer une valeur (RW) finale de réduction de la puissance en fonction de la valeur (SoC) réelle de l'état de charge et de la valeur (Kmax) supérieure initiale de correction, dans lequel il augmente, pour des valeurs (SoC) réelles de l'état de charge au-dessus de la valeur Kmax (Kmax) supérieure initiale de correction, les valeurs RW (RW) finales de réduction de la puissance plus que proportionnellement à la différence entre la valeur (SoC) réelle de l'état de charge et la valeur (Kmax) supérieure initiale de correction, dans lequel on a, en particulier,

$$RW = \begin{cases} (SoC - Kmax)^3 & pour & Kmax < SoC \leq 1 \\ 0 & pour & 0 \leq SoC \leq Kmax \end{cases}$$

- le dispositif (300) d'augmentation de la puissance est conformé pour déterminer, en fonction de la valeur (SoC) réelle de l'état de charge et de la valeur Kmin (Kmin) inférieure initiale de correction, une valeur EW finale d'augmentation de la puissance, dans lequel il, pour des valeurs (SoC) réelles de l'état de charge en-dessous de la valeur (Kmin) inférieure initiale de correction, augmente les valeurs EW finales d'augmentation de la puissance plus que proportionnellement à la différence entre la valeur (Kmin) inférieure initiale de correction et la valeur (SoC) réelle de l'état de charge, dans lequel, on a, en particulier :

$$EW = \begin{cases} (Kmin - SoC)^3 & pour & 0 \leq SoC < Kmin \\ 0 & pour & 1 \geq SoC \geq Kmin \end{cases}$$

- et le dispositif (400) de sortie est conformé pour former la prescription (Psk) corrigée de la puissance de charge, par le fait qu'il soustrait, de la prescription (Ps) de consigne de la puissance de charge, la valeur (RW) finale respective de réduction de la puissance et ajoute, à la prescription (Ps) de consigne de la puissance de charge, la valeur EW finale respective de l'augmentation de la puissance.

2. Dispositif (20) de commande de la puissance suivant la revendication 1,
   **caractérisé en ce que**
   le dispositif (22) de modification de la prescription effectue la correction de la prescription (Ps) de consigne de la puissance de charge, de manière à ce que la mesure de la modification s'élève plus que proportionnellement au rapprochement de la valeur (SoC) réelle de l'état de charge des limites (SoCmax, SoCmin) de la plage.

3. Dispositif (20) de commande de la puissance suivant la revendication 1,
   **caractérisé en ce que**
   le dispositif (200) de réduction de la puissance a un module (210) intermédiaire supérieur de réduction, qui, en soustrayant la valeur (Kmax) supérieure initiale de correction de la valeur (SoC) réelle de l'état de charge, détermine une valeur (Do) supérieure de différence et produit, avec la valeur (Do) supérieure de différence, une valeur Zo (Zo) intermédiaire supérieure de réduction, en tirant parti d'une fonction supérieure de réduction, qui associe une valeur (Zo) supérieure intermédiaire de réduction à chaque valeur (Do) supérieure de différence, dans lequel les valeurs (Zo) supérieures intermédiaires de réduction s'élèvent, au fur et à mesure que les valeurs (Do) supérieures de différences augmentent, proportionnellement ou plus que proportionnellement, dans lequel, on a, en particulier :

$$Zo = \begin{cases} (SoC - Kmax)^2 & \text{pour} \quad Kmax < SoC \leq 1 \\ 0 & \text{pour} \quad 0 \leq SoC \leq Kmax \end{cases}$$

4. Dispositif (20) de commande de la puissance suivant la revendication 3,
   **caractérisé en ce que**
   le dispositif (200) de réduction de la puissance a un régleur (220) PI supérieur, dans lequel on injecte, du côté de l'entrée, la valeur (Zo) intermédiaire supérieure de réduction respective et qui produit, du côté de la sortie, la valeur (RW) finale de réduction de la puissance, dans lequel la valeur de sortie maximum du régleur (220) PI supérieur est limitée à une valeur maximum, qui correspond à la puissance de sortie maximum de la source d'énergie.

5. Dispositif (20) de commande de la puissance suivant l'une des revendications précédentes,
   **caractérisé en ce que**
   le dispositif (300) d'augmentation de la puissance a un module (310) intermédiaire inférieur de réduction, qui, par soustraction de la valeur (SoC) réelle de l'état de charge de la valeur (Kmin) inférieure initiale de correction, détermine une valeur (Du) inférieure de différence et produit, avec la valeur (Du) inférieure de différence, une valeur (Zu) inférieure intermédiaire de réduction, en tirant parti d'une fonction inférieure de réduction, qui associe, à chaque valeur (Du) inférieure de différence, une valeur (Zu) intermédiaire inférieure de réduction, dans lequel les valeurs (Zu) intermédiaires inférieures de réduction s'élèvent proportionnellement ou plus que proportionnellement, au fur à mesure qu'augmentent les valeurs (Du) inférieures de différence, dans lequel, on **a,** en particulier :

$$Zu = \begin{cases} (Kmin - SoC)^2 & \text{pour} \quad 0 \leq SoC < Kmin \\ 0 & \text{pour} \quad 1 \geq SoC \geq Kmin \end{cases}$$

6. Dispositif (20) de commande de la puissance suivant la revendication 5,
   **caractérisé en ce que**
   le dispositif (300) d'augmentation de la puissance a un régleur (320) PI inférieur, dans lequel on injecte, du côté de l'entrée, la valeur (Zu) intermédiaire inférieure de réduction et qui produit, du côté de la sortie, la valeur (EW) finale d'augmentation de la puissance, dans lequel la valeur de sortie maximum du régleur (320) PI inférieur est limitée à une valeur maximum, qui correspond à la différence entre la puissance de sortie maximum de la source d'énergie et la prescription (Ps) de consigne de la puissance de charge.

7. Dispositif (20) de commande de la puissance suivant la revendication 3,
   **caractérisé en ce que**
   la fonction supérieure de réduction et/ou la fonction inférieure de réduction sont continues et différentiables, au moins différentiables par tronçons, et les valeurs (Zo, Zu) intermédiaires de réduction sont toujours plus grandes que zéro.

8. Dispositif (20) de commande de la puissance suivant la revendication 3 ou 7,
   **caractérisé en ce que**,

   pour la fonction supérieure de réduction et/ou la fonction inférieure de réduction, on a dans l'ensemble, pour au moins l'un de leurs tronçons :

   $$df/dx > 0$$

   et/ou

   $$d^2f/dx^2 > 0$$

   dans lesquelles f désigne la fonction supérieure ou inférieure de réduction.

9. Dispositif (20) de commande de la puissance suivant l'une des revendications précédentes,
   **caractérisé en ce que**
   ladite source d'énergie est une pile (30) à combustible et ledit accumulateur d'énergie est une batterie (40) de véhicule, dans lequel la puissance de la pile (30) à combustible est commandée par le dispositif (20) de commande de puissance.

10. Véhicule (10),
    **caractérisé en ce que**
    le véhicule (10) est équipé d'au moins un dispositif (20) de commande la puissance suivant l'une des revendications précédentes.

11. Véhicule (10) suivant la revendication 10,
    **caractérisé en ce que**
    le dispositif (20) de commande de la puissance a un dispositif (21) de prescription, qui calcule la prescription (Ps) de consigne de la puissance de charge en fonction de données de voies d'au moins un tronçon (70) de voie devant le véhicule (10) et/ou en fonction du temps.

12. Procédé de commande d'une puissance (Pb) de charge électrique d'une source d'énergie, qui sert à charger un accumulateur d'énergie électrique, dans lequel

    on modifie, avec formation d'une prescription (Psk) corrigée de la puissance de charge, une prescription (Ps) de consigne de la puissance de charge en fonction d'un état de charge respectif de l'accumulateur d'énergie, si une valeur SoC (SoC) réelle de l'état de charge indiquant l'état de charge se rapproche d'une limite (SoCmax, SoCmin) inférieure ou supérieure de plage d'une bande (SB) de consigne donnée à l'avance,
    **caractérisé en ce que**
    l'on effectue la modification par le dispositif (22) de modification de prescription, par le fait qu'il

    - pour des valeurs (SoC) réelles de l'état de charge au-dessus d'une valeur (Kmax) supérieure initiale de correction donnée à l'avance, qui est plus petite que la limite (SoCmax) supérieure de la plage, réduit la prescription (Ps) de consigne de puissance de charge plus que proportionnellement au dépassement de la valeur (Kmax) supérieure initiale de correction, et
    - pour des valeurs (SoC) réelles de l'état de charge inférieures à une valeur (Kmin) inférieure de correction initiale donnée à l'avance, qui est plus grande que la limite (SoCmin) inférieure de la plage, augmente la prescription (Ps) de consigne de puissance de charge plus que proportionnellement au sous-dépassement de la valeur (Kmin) inférieure initiale de correction,

    le dispositif (20) de commande de la puissance a un dispositif (200) de réduction de la puissance, un dispositif (300) d'augmentation de la puissance et un dispositif (400) de sortie, dans lequel

    - le dispositif (200) de réduction de la puissance est conformé pour déterminer une valeur (RW) finale de réduction de la puissance en fonction de la valeur (SoC) réelle de l'état de charge et de la valeur (Kmax) supérieure initiale de correction, dans lequel il augmente, pour des valeurs (SoC) réelles de l'état de charge au-dessus de la valeur Kmax (Kmax) supérieure initiale de correction, les valeurs RW (RW) finales de réduction de la puissance plus que proportionnellement à la différence entre la valeur (SoC) réelle de l'état de charge et la valeur (Kmax) supérieure initiale de correction, dans lequel on a, en particulier,

$$RW = \begin{cases} (SoC - Kmax)^3 & \text{pour} \quad Kmax < SoC \leq 1 \\ 0 & \text{pour} \quad 0 \leq SoC \leq Kmax \end{cases}$$

- le dispositif (300) d'augmentation de la puissance est conformé pour déterminer, en fonction de la valeur (SoC) réelle de l'état de charge et de la valeur Kmin (Kmin) inférieure initiale de correction, une valeur EW finale d'augmentation de la puissance, dans lequel il, pour des valeurs (SoC) réelles de l'état de charge en-dessous de la valeur (Kmin) inférieure initiale de correction, augmente les valeurs EW finales d'augmentation de la puissance plus que proportionnellement à la différence entre la valeur (Kmin) inférieure initiale de correction et la valeur (SoC) réelle de l'état de charge, dans lequel, on **a,** en particulier :

$$EW = \begin{cases} (Kmin - SoC)^3 & \text{pour} \quad 0 \leq SoC < Kmin \\ 0 & \text{pour} \quad 1 \geq SoC \geq Kmin \end{cases}$$

- et le dispositif (400) de sortie est conformé pour former la prescription (Psk) corrigée de la puissance de charge, par le fait qu'il soustrait, de la prescription (Ps) de consigne de la puissance de charge, la valeur (RW) finale respective de réduction de la puissance et ajoute, à la prescription (Ps) de consigne de la puissance de charge, la valeur EW finale respective de l'augmentation de la puissance.

# FIG 1

# FIG 2

EP 4 279 317 B1

## FIG 3

100

SoC

Psk

22

110

SW

SW200 → RW

SW300 → EW

SW400 → Psk

SoC

Psk

Ps

SW2

Ps

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8204416 B2
- US 2012109443 A1

- EP 1087877 B1